# EUROPÄISCHE PATENTSCHRIFT

(11) **EP 3 676 662 B1**
(45) Veröffentlichungstag und Bekanntmachung des Hinweises auf die Patenterteilung: **08.12.2021**
(21) Anmeldenummer: 18732375.3
(22) Anmeldetag: 27.06.2018
(51) Int. Cl.: G02F 1/133, G02F 1/163, E06B 9/24

(54) **FAHRZEUG-SCHEIBE MIT EINER VIELZAHL VON INTEGRIERTEN ELEKTRO-OPTISCHEN ELEMENTEN**
VEHICLE SHIELD HAVING A PLURALITY OF INTEGRATED ELECTRO-OPTICAL ELEMENTS
VITRE DE VEHICULE POURVUE D'UNE PLURALITÉ D'ÉLÉMENTS ÉLECTRO-OPTIQUES INTÉGRÉS ET SON PROCÉDÉ DE PRODUCTION

(30) Priorität: 31.08.2017 EP 17188671
(43) Veröffentlichungstag der Anmeldung: 08.07.2020
(73) Patentinhaber: SAINT-GOBAIN GLASS FRANCE, 92400 Courbevoie (FR)
(72) Erfinder: REUL, Bernhard, 52134 Herzogenrath (DE); LABROT, Michael, 52072 Aachen (DE); LETOCART, Philippe, 4730 Raeren (BE); EFFERTZ, Christian, 52080 Aachen (DE)
(74) Vertreter: Gebauer, Dieter Edmund
(86) Internationale Anmeldenummer: PCT/EP2018/067191
(87) Internationale Veröffentlichungsnummer: WO 2019/042623

(56) Entgegenhaltungen:
- WO-A2-2009/158510
- US-A- 5 397 888
- US-B1- 6 373 618

## Beschreibung

Fahrzeug-Scheibe mit einer Vielzahl von integrierten elektro-optischen Elementen Die Erfindung betrifft eine Fahrzeug-Scheibe mit einer Vielzahl von integrierten elektro-optischen Elementen.

Es ist bekannt, dass Scheiben mit steuerbaren optischen Elementen ausgestattet werden können. Für die steuerbaren optischen Elemente stehen unterschiedliche Technologien zur Verfügung. Optisch steuerbare Elemente können dabei unter Einfluss einer angelegten Spannung ihre Eigenschaften in Bezug auf Transmission ändern. So ist es z.B. möglich von einem transparenten Zustand in einen "Milchglaszustand" oder aber in einen "abgedunkelten" Zustand zu schalten. Je nach verwendeter Technologie kann dabei ein graduelles Umschalten oder aber ein binäres Umschalten ermöglicht werden. Solche Elemente werden z.B. im Fahrzeugbau aber auch im Bauglasbereich als Sonnen- und / oder Blick- Schutz eingesetzt.

Aus der internationalen Patentanmeldung WO 2016 / 063 277 A2 ist es bekannt PDLC (Polymer dispersed liquid crystals) Displays herzustellen. Weiterhin ist aus der internationalen Patentanmeldung WO 2016 / 063 277 A2 bekannt Segmente des Displays, die an einer Energieversorgung angeschlossen sind, parallel anzusteuern. D.h. neben der Energieversorgung für jedes der Segmente wird zudem pro Segment mindestens eine Schaltleitung benötigt.

Ein gleichartiges System für Gebäudeglas ist auch aus der US 5,397,888 bekannt. Dort wird mittels jeweiliger Steuerleitungen jeweils ein Segment eines elektrochromen Displays angesteuert. US 5 397 888 A offenbart somit eine Scheibe für ein Gebäude mit einer Vielzahl von integrierten elektro-optischen Elementen, wobei die elektro-optischen Elemente über eine gemeinsame Versorgungsspannung verfügen, wobei die integrierten elektro-optischen Elemente durch eine logische Steuereinheit einzeln angesteuert werden kann, wobei jedes elektro-optische Element einzeln adressiert wird, sodass die elektro-optischen Elemente am jeweiligen Ort die optischen Eigenschaften der Scheibe verändern, wobei die Steuereinheit in einem Rahmen der Scheibe angeordnet ist, wobei zur Ansteuerung der elektro-optischen Elemente als auch zur Bereitstellung der gemeinsamen Versorgungsspannung eine erste logische Schnittstelle für die Einspeisung der gemeinsamen Versorgungsspannung und eine zweite logische Schnittstelle für die Einspeisung eines gemeinsamen Steuersignals bereitgestellt ist, wobei das gemeinsame Steuersignal nachfolgend zur zweiten logischen Schnittstelle in Steuersignale für die Ansteuerung der integrierten elektro-optischen Elemente einzeln gewandelt wird.

Es hat sich jedoch gezeigt, dass die vorstehenden Lösungen in vielen Bereichen nachteilig sind, da der Anschluss der einzelnen Segmente viel Platz einnimmt. Der Platzverbrauch führt auch dazu, dass die Anschlüsse wegen hoher mechanischer Beanspruchung häufig beim Zusammenbau beschädigt werden. Weiterhin stellt auch die Vielzahl der notwendigen Steuerleitungen in einigen Bereichen eine problematische Störung der Transmissionseigenschaften dar.

Vor diesem Hintergrund ist es eine Aufgabe der Erfindung eine Scheibe zur Verfügung zu stellen, die einen sicheren Anschluss bei gleichzeitig verbesserten optischen Eigenschaften bietet.

Die Aufgabe wird gelöst durch eine Fahrzeug-Scheibe mit den Merkmalen von Patentanspruch 1. Diese umfasst eine Vielzahl von integrierten elektro-optischen Elementen, wobei die elektro-optischen Elemente über eine gemeinsame Versorgungsspannung verfügen, wobei die integrierten elektro-optischen Elemente durch logische Steuereinheiten einzeln angesteuert werden können, wobei jedes elektro-optische Element einzeln adressiert wird, sodass die elektro-optischen Elemente am jeweiligen Ort die optischen Eigenschaften der Scheibe verändern, wobei die Steuereinheiten in einer Zwischenschicht der Fahrzeug-Scheibe angeordnet sind, wobei zur Ansteuerung der elektro-optischen Elemente als auch zur Bereitstellung der gemeinsamen Versorgungsspannung eine erste logische Schnittstelle für die Einspeisung der gemeinsamen Versorgungsspannung und eine zweite logische Schnittstelle für die Einspeisung eines gemeinsamen Steuersignals bereitgestellt ist, wobei das gemeinsame Steuersignal nachfolgend zur zweiten logischen Schnittstelle in Steuersignale für die Ansteuerung der integrierter elektro-optischen Elemente einzeln gewandelt wird, wobei eine als Steckverbinder ausgebildete physikalische Schnittstelle auf einer der Außenseiten der Scheibe angeordnet ist, wobei die physikalische Schnittstelle für die erste logische Schnittstelle und die zweite logische Schnittstelle zusammen 3 oder 4 elektrische Anschlüsse aufweist.

Mittels der vorgestellten Erfindung ist es möglich, einzelne Segmente anzusteuern, wobei der Platzbedarf für die Energieversorgung als auch die Ansteuerung klein gehalten werden kann. Zudem erlaubt die Anordnung eine einfache und sichere Verkabelung und gewährleistet somit eine lange Lebensdauer. Weiterhin können mittels einer geringen Anzahl von Leitungen die einzelnen elektro-optische Elemente äußerst effektiv selektiv angesteuert werden.

In einer Ausgestaltung der Erfindung sind die elektro-optischen Elemente zur Steuerung der optischen Transparenz der Scheibe vorgesehen. D.h. die Transparenz kann in geeigneten Stufen an die Umgebung oder nach Wunsch angepasst werden.

Gemäß einer weiteren Ausgestaltung der Erfindung sind die elektro-optischen Elemente ausgewählt aus einer Gruppe aufweisend: elektro-chrome Beschichtung, suspended particle device, Flüssigkristall, Polymer dispersed liquid crystal device. Somit kann die Erfindung mit unterschiedlichen Arten von elektro-optischen Elementen für unterschiedliche Zwecke verwendet werden.

Gemäß noch einer weiteren Ausgestaltung der Erfindung ist die physikalische Schnittstelle auf einem Rücksprung der Scheibe angeordnet. Durch diese Ausgestaltung kann der Raumbedarf minimiert werden.

In einer weiteren Ausgestaltung der Erfindung ist die zweite logische Schnittstelle ein Eindraht- oder Zweidraht-Schnittstelle. D.h. mittels einer geringen Anzahl von Leitungen können die einzelnen elektro-optische Elemente äußerst effektiv selektiv angesteuert werden.

In noch einer weiteren Ausgestaltung der Erfindung ist die zweite logische Schnittstelle an ein Bus-System anbindbar. D.h. die elektro-optischen Elemente in der erfindungsgemäßen Scheibe können in eine Steuerung integriert werden.

Gemäß einer weiteren Ausgestaltung der Erfindung bindet die zweite logische Schnittstelle weiterhin Sensor- und/oder Anzeigeelemente in der Scheibe elektrisch an. Damit kann z.B. eine Steuerung der elektro-optischen Elemente in der erfindungsgemäßen Scheibe als auch andere Einrichtungen ermöglicht werden, wobei die Anzahl von Leitungen minimiert wird.

In einer weiteren Ausgestaltung der Erfindung ist die physikalische Schnittstelle an einem Rand der Scheibe angeordnet. Hiermit kann z.B. der Anschluss auch in einem Rahmenbereich verlegt werden, sodass die Transparenz der Scheibe großflächig erhalten bleibt.

In noch einer weiteren Ausgestaltung der Erfindung stellt die erste logische Schnittstelle eine Wechselspannung bereit. Hiermit können auch elektro-optische Elemente bestimmter Technologien, die eine Wechselspannung erfordern, angesteuert werden.

Gemäß noch einer weiteren Ausgestaltung der Erfindung stellt die erste logische Schnittstelle eine Gleichspannung bereit. Hiermit können auch elektro-optische Elemente bestimmter Technologien, wie z.B. elektro-chrome Beschichtung, die eine Gleichspannung erfordern, angesteuert werden.

Mittels der vorgestellten Erfindung ist es möglich eine Scheibe bereitzustellen, bei der die einzelnen Segmente angesteuert werden können, wobei der Platzbedarf für die Energieversorgung als auch die Ansteuerung klein gehalten werden kann. Zudem erlaubt die Anordnung eine einfache und sichere Verkabelung und gewährleistet somit eine lange Lebensdauer.

Die erfindungsgemäßen Scheiben können sowohl in Fahrzeugen als auch in Gebäuden verwendet werden.

Ausführungsformen der vorliegenden Erfindung werden in exemplarischer Weise mit Bezug auf die angehängten Zeichnungen beschrieben:

Es zeigen:

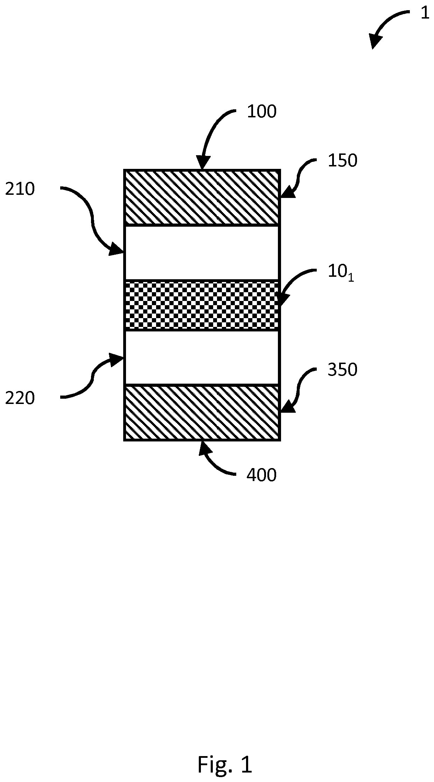

- Fig. 1: eine schematische Darstellung von Schichten einer Scheibe im Schnitt,
- Fig. 2: eine schematische Darstellung von logischen Elementen gemäß einer Ausführungsform der Erfindung,
- Fig. 3: eine weitere schematische Darstellung von logischen Elementen, welche nicht Teil der Erfindung ist,
- Fig. 4: eine schematische Darstellung von Schichten einer Scheibe im Schnitt mit weiteren Aspekten der Erfindung, und

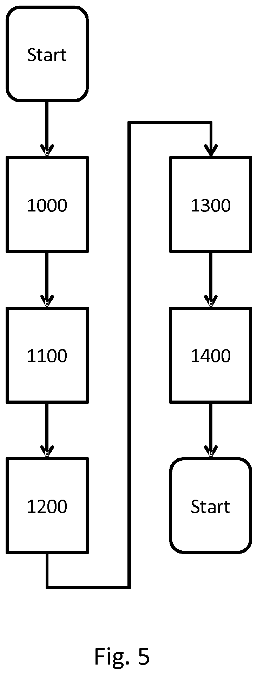

- Fig. 5: ein schematisches Ablaufdiagramm eines Herstellungsverfahrens.

Nachfolgend wird die Erfindung eingehender unter Bezugnahme auf die Figuren dargestellt werden. Dabei ist anzumerken, dass unterschiedliche Aspekte beschrieben werden, die jeweils einzeln oder in Kombination zum Einsatz kommen können. D.h. jeglicher Aspekt kann mit unterschiedlichen Ausführungsformen der Erfindung verwendet werden soweit nicht explizit als reine Alternative dargestellt.

Angaben mit Zahlenwerten sind in aller Regel nicht als exakte Werte zu verstehen, sondern beinhalten auch eine Toleranz von +/- 1% bis zu +/- 10 %.

Nachfolgend wird auf logische und physikalische Schnittstellen Bezug genommen werden.

Dabei ist zu bemerken, dass eine physikalische Schnittstelle mehr als eine logische Schnittstelle zur Verfügung stellen kann. So kann z.B. auf einer Gleichspannung bzw. einer nieder-frequenten Wechselspannung ein höher-frequentes Signal vorhanden sein. Dieses kombinierte Signal kann über eine physikalische Schnittstelle zur Verfügung gestellt werden. Dieses Signal kann dann aber zwei logischen Schnittstellen entsprechen, wobei eine Schnittstelle für das höher-frequente Signal und die andere Schnittstelle für die Gleichspannung bzw. einer nieder-frequenten Wechselspannung verwendet wird.

Eine erfindungsgemäße Fahrzeug-Scheibe 1 weist eine Vielzahl von integrierten elektro-optischen Elementen 10₁,10₂,10₃,...10_{N} auf. Dabei verfügen die elektro-optischen Elemente 10₁,10₂,10₃,...10_{N} über eine gemeinsame Versorgungsspannung.

Die Versorgungsspannung wird z.B. über eine logische Schnittstelle 20 zur Verfügung gestellt.

In den erfindungsgemäßen Ausführungsformen können die integrierten elektro-optischen Elemente 10₁,10₂,10₃,...10_{N} einzeln durch eine Steuerung 30₁,30₂,30₃...30_{N} angesteuert werden, sodass die elektro-optischen Elemente am jeweiligen Ort die optischen Eigenschaften der Scheibe 1 verändern, wobei zur Ansteuerung der elektro-optischen Elemente 10₁,10₂,10₃,...10_{N} als auch zur Bereitstellung der gemeinsamen Versorgungsspannung eine erste logische Schnittstelle 20 für die Einspeisung der gemeinsamen Versorgungsspannung und eine zweite logische Schnittstelle 21 für die Einspeisung eines gemeinsamen Steuersignals bereitgestellt ist, wobei das Steuersignal nachfolgend zur zweiten logischen Schnittstelle in Steuersignale für die Ansteuerung der integrierten elektro-optischen Elemente 10₁,10₂,10₃,...10_{N} einzeln gewandelt wird, wobei die physikalische Schnittstelle 40 auf einer der Außenseiten 100,400 der Scheibe 1 angeordnet ist.

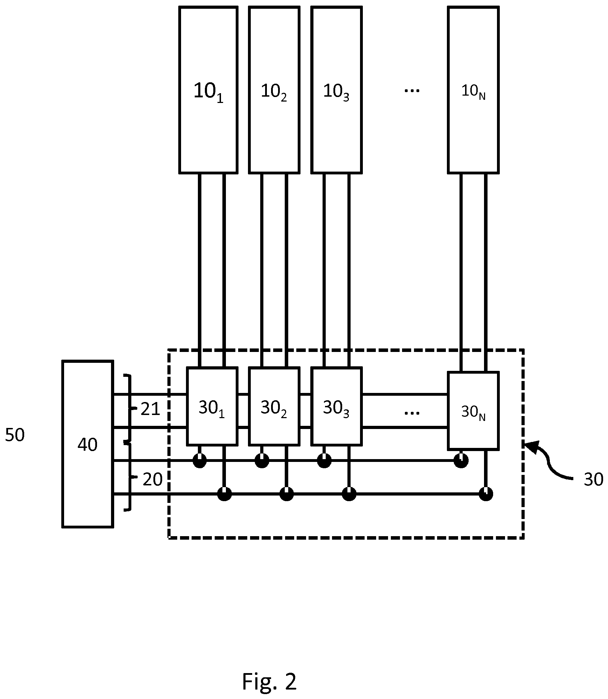

Dabei ist in Figur 2 der Fall dargestellt, dass die integrierten elektro-optischen Elemente 10₁,10₂,10₃,...10_{N} einzeln durch eine Steuerung 30₁,30₂,30₃...30_{N} angesteuert werden. Hier werden z.B. die Signale entsprechend einer logischen Aufteilung der Schnittstellen 20 und 21 als eine gemeinsame Spannungsversorgung (untere Verbindungen) an logische Steuereinheiten 30₁,30₂,30₃...30_{N} geführt, die ihrerseits über eine Schnittstelle 21 (obere Verbindungen) Steuersignale erhalten und auswerten. Erkennt die jeweilige Steuereinheit 30₁,30₂,30₃...30_{N}, dass das ihr zugeordnete elektro-optische Element 10₁,10₂,10₃,...10_{N} zu schalten ist, so wird die Verbindung zur Spannungsversorgung hergestellt. D.h. die Ansteuerung erfolgt in räumlicher Nähe.

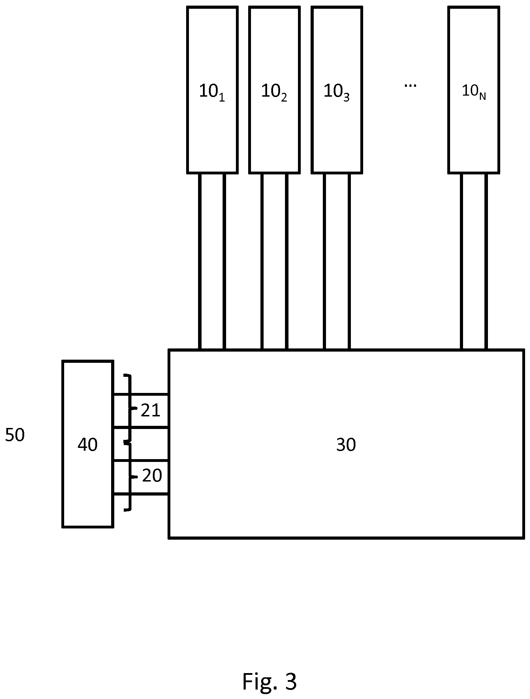

In Figur 3 hingegen, welche nicht Teil der Erfindung ist, ist der Fall dargestellt, dass die integrierten elektro-optischen Elemente 10₁,10₂,10₃,...10_{N} durch eine Steuerung 30 in Gruppen angesteuert werden. Hier werden z.B. die Signale entsprechend einer logischen Aufteilung der Schnittstellen 20 und 21 als eine gemeinsame Spannungsversorgung (untere Verbindungen) an eine Steuereinheit 30 geführt, die ihrerseits über eine Schnittstelle 21 (obere Verbindungen) Steuersignale erhält und auswertet. Erkennt die Steuereinheit 30, dass eine oder mehrere der ihr zugeordneten elektro-optischen Elementen 10₁,10₂,10_{3,}...10_{N} zu schalten sind, so wird die Verbindung zur Spannungsversorgung hergestellt. D.h. die Ansteuerung erfolgt zentralisiert in räumlicher Nähe.

Die Steuerung wird so vorgenommen, dass jedes der elektro-optischen Elemente 10₁,10₂,10₃,...10_{N} einzeln adressiert wird, jedoch z.B. über eine gemeinsame Steuerung der Spannung auf der logischen Schnittstelle die Transparenz für alle angesteuerten elektro-optischen Elemente 10₁,10₂,10₃,...10_{N} gemeinsam gesteuert wird. Diese Variante kann besonders einfach in der Ausführungsform gemäß Figur 2 verwendet werden.

Es bleibt anzumerken, dass die unterschiedlichen Varianten jeweils eigene Vorzüge aufweisen. So erlaubt eine Aufteilung in einzelne Teilsteuerung z.B. eine bessere Verteilung von thermischen Quellen. Eine zentrale Steuerung, welche nicht Teil der Erfindung ist, kann hingegen platzsparender sein. Somit können unterschiedliche Ziele stärker betont werden.

Erfindungsgemäß ist die Steuerung 30; 30₁,30₂,30₃...30_{N} in einer Zwischenschicht angeordnet. Gemäß der Erfindung weist die physikalische Schnittstelle 40 von der Fahrzeug-Scheibe (1) weg drei oder vier elektrische Anschlüsse auf.

Mittels der vorgestellten Erfindung ist es möglich einzelne Segmente anzusteuern, wobei der Platzbedarf für die Energieversorgung als auch die Ansteuerung klein gehalten werden kann. Zudem erlaubt die Anordnung eine einfache und sichere Verkabelung und gewährleistet somit eine lange Lebensdauer. D.h. mittels einer geringen Anzahl von Leitungen können die einzelnen elektro-optische Elemente 10₁,10₂,10₃,...10_{N} äußerst effektiv selektiv angesteuert werden.

In einer Ausgestaltung der erfindungsgemäßen Scheibe 1 sind die elektro-optischen Elemente 10₁,10₂,10₃,...10_{N} zur Steuerung der optischen Transparenz der Scheibe 1 vorgesehen. D.h. die optische Transparenz kann in geeigneten Stufen an die Umgebung oder nach Wunsch angepasst werden. Dabei können sowohl zwei Stufen (Transparent/Nicht-Transparent) als auch mehrere (Zwischen-) Stufen als auch bei bestimmten elektro-optischen Schichten eine stufenlose Anpassung ermöglicht werden. Dabei kann sowohl eine gemeinsame Ansteuerung der Transparenz für ausgewählte elektro-optischen Elemente als auch eine für jedes Element einstellbare Transparenz vorgesehen sein.

In einer Ausführungsform der Erfindung sind die elektro-optischen Elemente 10₁,10₂,10₃,...10_{N} ausgewählt aus einer Gruppe aufweisend: elektro-chrome Beschichtung, suspended particle device, Flüssigkristall, Polymer dispersed liquid crystal device. Somit kann die Erfindung mit unterschiedlichen Arten von elektro-optischen Elementen für unterschiedliche Zwecke verwendet werden. Dabei stellen z.B. elektro-chrome Beschichtung, suspended particle device, Flüssigkristall eine Änderung von einem dunklen in einen transparenten Zustand zur Verfügung während z.B. ein Polymer dispersed liquid crystal device eine Änderung von einem transparenten in einen Milchglas-Zustand zur Verfügung stellen kann.

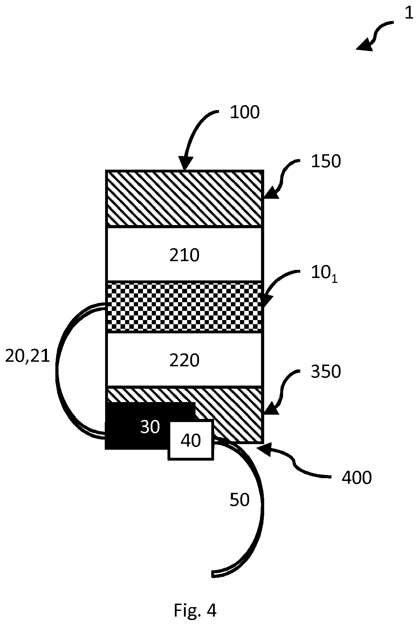

In einer weiteren Ausgestaltung der Erfindung ist die physikalische Schnittstelle 40, wie in Figur 4 gezeigt, auf einem Rücksprung der Scheibe 1 auf der Außenseite 400 angeordnet. Der Rücksprung kann dabei von deutlich weniger als 1 mm bis zu 2 mm betragen und ist lediglich durch die Stabilitätserfordernisse der Glasschicht als auch der Scheibe 1 begrenzt. Durch diese Ausgestaltung kann der Raumbedarf minimiert werden und zusätzliche Stabilität für die physikalische Schnittstelle 40 zur Verfügung gestellt werden.

In noch einer weiteren Ausgestaltung der Erfindung ist die zweite logische Schnittstelle 21 ein Eindraht- oder Zweidraht-Schnittstelle. Mittels Eindraht- oder Zweidraht-Schnittstellen kann die logische Schnittstelle 21 physikalisch platzsparend ausgestaltet sein. Eine sogenannte Eindraht-Schnittstelle kombiniert dabei sowohl die Versorgungsspannung als auch die Datenleitung und stellt eine Kombination aus erster logischer Schnittstelle 20 und zweiter logischer Schnittstelle 21 auf zumindest zwei physikalischen Leitern zur Verfügung.

In einer Ausgestaltung der Erfindung ist die zweite logische Schnittstelle 21 an ein Bus-System, z.B. über ein Kabel 50, anbindbar. Beispielsweise kann damit eine Verbindung zu einem Fahrzeugbussystem, wie z.B. einem CAN-Bus, oder aber zu einem Elektroinstallationsbussystem, wie z.B. der Europäische Installationsbus (EIB), bereitgestellt werden. D.h. die elektro-optischen Elemente in der erfindungsgemäßen Scheibe können in eine Steuerung integriert werden.

Gemäß einer weiteren Ausgestaltung der Erfindung bindet die zweite logische Schnittstelle 21 weiterhin Sensor- und/oder Anzeigeelemente in der Scheibe 1 elektrisch an. Beispielsweise können ein oder mehrere (kapazitive) Sensoren (Näherungsschalter/Touch-Control, Regensensor) oder aber Leuchtdioden zwischen den Glasschichten 150 und 350 angeordnet sein. Damit kann z.B. eine manuelle Steuerung der elektro-optischen Elemente 10₁,10₂,10₃,...10_{N} in der erfindungsgemäßen Scheibe 1 als auch andere Einrichtungen (über den BUS) ermöglicht werden, wobei die Anzahl von Leitungen minimiert wird.

In einer weiteren Ausgestaltung der Erfindung ist die physikalische Schnittstelle 40 am Rand der Scheibe 1 angeordnet. Hiermit kann z.B. der Anschluss auch in einem Rahmenbereich verlegt werden, sodass die Transparenz der Scheibe großflächig erhalten bleibt.

In noch einer weiteren Ausgestaltung der Erfindung stellt die erste logische Schnittstelle 20 eine Wechselspannung bereit. Hiermit können auch elektro-optische Elemente bestimmter Technologien, wie z.B. Flüssigkristall, Polymer dispersed liquid crystal device, suspended particle device, die eine Wechselspannung erfordern, angesteuert werden.

Gemäß einer hierzu alternativen Ausgestaltung der Erfindung stellt die erste logische Schnittstelle 20 eine Gleichspannung bereit. Hiermit können auch elektro-optische Elemente bestimmter Technologien, wie z.B. elektro-chrome Beschichtung, die eine Gleichspannung erfordern, angesteuert werden.

Nachfolgend wird zudem ein Herstellungsverfahren beschrieben. Das Verfahren zur Herstellung einer Scheibe 1 weist dabei einen Schritt des Bereitstellens 1000 einer ersten Glasschicht 150, den Schritt des Breitstellens 1100 einer Vielzahl von elektro-optischen Elementen 10₁,10₂,10₃,...10_{N}, den Schritt des Bereitstellens 1200 von elektrischen Verbindungen zu der Vielzahl von elektro-optischen Elementen 10₁,10₂,10₃,...10_{N},den Schritt des Bereitstellens 1300 einer zweiten Glasschicht 350, und den Schritt des Verbindens 1400 der ersten Glasschicht 150 und der zweiten Glasschicht 350 auf, wobei die Vielzahl von elektro-optischen Elementen 10₁,10₂,10₃,...10_{N} als auch die elektrischen Verbindungen zwischen der ersten Glasschicht 150 und der zweiten Glasschicht 350 angeordnet sind.

Mittels der vorgestellten Erfindung ist es möglich eine Scheibe 1 herzustellen, bei der die einzelnen elektro-optischen Elementen 10₁,10₂,10_{3,}...10_{N} angesteuert werden können, wobei der Platzbedarf für die Energieversorgung als auch die Ansteuerung klein gehalten werden kann. Zudem erlaubt die Anordnung eine einfache und sichere Verkabelung und gewährleistet somit eine lange Lebensdauer. Beispielsweise kann die Scheibe kapazitive Sensoren aufweisen.

In einer Ausgestaltung des Verfahrens wird die Vielzahl von elektro-optischen Elementen 10₁,10₂,10₃,...10_{N} durch Trennen einzelner Elemente gebildet. D.h. die einzelnen elektro-optischen Elemente 10₁,10₂,10₃,...10_{N} können sowohl vor dem Aufbringen auf eine Glasschicht 150 / 350 als auch nach dem Aufbringen auf eine Glasschicht gebildet werden und somit an unterschiedliche Verarbeitungsketten angepasst werden. Das Trennen kann dabei durch geeignete Schneidewerkzeuge oder durch Bearbeitung mittels Lasers bewerkstelligt werden. In aller Regel werden die einzelnen elektro-optischen Elemente 10₁,10₂,10₃,...10_{N} aus einem vorproduzierten Halbzeug, z.B. einem bereits mit Elektroden versehenen Foliensandwich, gebildet. Dabei können die einzelnen elektro-optischen Elemente 10₁,10₂,10₃,...10_{N} physikalisch bereitgestellt sein, als auch durch Bearbeiten der Elektroden entsprechend logisch gebildet werden. Eine Bereitstellung von elektro-optischen Elementen 10₁,10₂,10₃,...10_{N} durch Strukturierung einer Elektrode kann dabei zu einer Minimierung des Verdrahtungsaufwandes genutzt werden.

In einer weiteren Ausgestaltung des Verfahrens werden die elektrischen Verbindungen der elektro-optischen Elemente 10₁,10₂,10_{3,}...10_{N} durch Kontaktierungen am Rand der einzelnen elektro-optischen Elemente 10₁,10₂,10_{3,}...10_{N} gebildet. D.h. mittels einer randständigen Kontaktierung von Elektroden bleibt die Transparenz der Scheibe großflächig erhalten.

Die erfindungsgemäßen Fahrzeug-Scheiben 1 können in Fahrzeugen aller Art, d.h. in Land-, Wasser-, Luft- und Raumfahrzeugen etc. verwendet werden.

Insbesondere wird durch die Erfindung ermöglicht, dass die bisher zu verzeichnende Zahl von Komplikationen beim Einbau von Scheiben und der Verkabelung vermindert werden kann, da nunmehr nur noch eine überschaubare Zahl von Anschlüssen, z.B. 2 oder 3 oder 4 Anschlüsse, mittels einer Steckverbindung, hergestellt werden muss. Dies erhöht die Montagefreundlichkeit und erhöht auch die Kontaktsicherheit. Insbesondere verwendet die Erfindung eine Steuerung 30; 30₁... 30_{N} die im Wesentlichen mit 2 Leitungen einer ersten logischen Schnittstelle 20 für die Spannungsversorgung und 2 Leitungen einer zweiten logischen Schnittstelle 21 für die Ansteuerung auskommt. Durch entsprechende Ausgestaltung der logischen Schnittstelle kann damit die physikalische Schnittstelle 40 auf 2, 3 oder 4 Drähte reduziert werden.

Die Steuerung 30; 30₁... 30_{N} kann in SMD ausgeführt sein. Vereinfacht kann sie als eingangsseitig direkt mit der physikalischen Schnittstelle 40 verbunden angesehen werden, wobei ausgangsseitig jedes der elektro-optischen Elemente 10₁,10₂,10_{3,}...10_{N} über zumindest eine Hin-Leitung und je nach Ausführungsform einer gemeinsamen Rück-Leitung oder individueller Rück-Leitungen angebunden ist. Wird die Steuerung 30 als eine Abfolge von logischen Steuereinheiten 30₁... 30_{N} aufgefasst, so kann vereinfacht angenommen werden, dass die logischen Steuereinheiten 30₁... 30_{N} parallel an die Spannungsversorgung (logische Schnittstelle 20) angeschlossen sind, während das Steuersignal über einen internen Bus seriell (logische Schnittstelle 21) zur Verfügung gestellt wird. Jede der logischen Steuereinheiten 30₁... 30_{N} kann dann das Steuersignal "auswerten" und das zugehörige elektro-optische Element 10₁,10₂,10₃,...10_{N} entsprechend ansteuern. Dabei kann die Logik digital (mittels Logikschaltkreisen) gestaltet sein, während z.B. die tatsächliche Schaltung der Spannung an die elektro-optischen Elemente 10₁,10₂,10₃,...10_{N} je nach Technologie auch über (MOS-) FET- oder BiPolar-Transistor, (Solid-State)-Relais, Triac oder dergleichen bewerkstelligt sein kann.

Dabei sei nochmals angemerkt, dass die Steuerung 30₁... 30_{N} innerhalb der Scheibe 1, z.B. in oder auf einer Verbindungsschicht 210 oder 220 angeordnet ist. Beispielhafte Verbindungsschichten 210 oder 220 können z.B. Polyvinylbutyral (PVB) aufweisen.

### Bezeichnungsliste

- 1: (Glas-) Scheibe
- 10₁ ...10_{N}: elektro-optisches Element
- 20: logische Schnittstelle, Spannungsversorgung
- 21: logische Schnittstelle, Ansteuerung
- 30, 30₁ ...30_{N}: Steuerung
- 40: physikalische Schnittstelle
- 50: Anschlussleitung
- 100: Außenfläche
- 150: Glasschicht
- 210: Verbindungsschicht
- 220: Verbindungsschicht
- 350: Glasschicht
- 400: Außenfläche

### Verfahrensschritte

- 1000: Bereitstellen einer ersten Glasschicht
- 1100: Breitstellen einer Vielzahl von elektro-optischen Elementen
- 1200: Bereitstellen von elektrischen Verbindungen
- 1300: Bereitstellen einer zweiten Glasschicht
- 1400: Verbinden der ersten Glasschicht und der zweiten Glasschicht

## Patentansprüche

1. Fahrzeug-Scheibe (1) mit einer Vielzahl von integrierten elektro-optischen Elementen (10₁,10₂,10₃,...10_{N}), wobei die elektro-optischen Elemente (10₁,10₂,10₃,...10_{N}) über eine gemeinsame Versorgungsspannung verfügen, wobei die integrierten elektro-optischen Elemente (10₁,10₂,10₃,...10_{N}) durch logische Steuereinheiten (30₁,30₂,30₃,...30_{N}) einzeln angesteuert werden können, wobei jedes elektro-optische Element (10₁,10₂,10₃,...10_{N}) einzeln adressiert wird, sodass die elektro-optischen Elemente (10₁,10₂,10₃,...10_{N}) am jeweiligen Ort die optischen Eigenschaften der Scheibe (1) verändern können, wobei die Steuereinheiten (30₁,30₂,30₃,...30_{N}) in einer Zwischenschicht der Fahrzeug-Scheibe angeordnet sind, wobei zur Ansteuerung der elektro-optischen Elemente (10₁,10₂,10₃,...10_{N}) als auch zur Bereitstellung der gemeinsamen Versorgungsspannung eine erste logische Schnittstelle (20) für die Einspeisung der gemeinsamen Versorgungsspannung und eine zweite logische Schnittstelle (21) für die Einspeisung eines gemeinsamen Steuersignals bereitgestellt ist, wobei das gemeinsame Steuersignal nachfolgend zur zweiten logischen Schnittstelle (21) in Steuersignale für die Ansteuerung der integrierten elektro-optischen Elemente (10₁,10₂,10₃,...10_{N}) einzeln gewandelt wird, wobei eine als Steckverbinder ausgebildete physikalische Schnittstelle (40) auf einer der Außenseiten (100,400) der Scheibe (1) angeordnet ist, wobei die physikalische Schnittstelle (40) für die erste logische Schnittstelle (20) und die zweite logische Schnittstelle (21) zusammen 3 oder 4 elektrische Anschlüsse aufweist.

2. Fahrzeug-Scheibe (1) nach Anspruch 1, **dadurch gekennzeichnet, dass** die elektro-optischen Elemente (10₁,10₂,10₃,...10_{N}) zur Steuerung der optischen Transparenz der Scheibe (1) vorgesehen sind.

3. Fahrzeug-Scheibe (1) nach Anspruch 1 oder 2, **dadurch gekennzeichnet, dass** die elektro-optischen Elemente (10₁,10₂,10₃,...10_{N}) ausgewählt sind aus einer Gruppe aufweisend: elektro-chrome Beschichtung, suspended particle device, Flüssigkristall, Polymer dispersed liquid crystal device.

4. Fahrzeug-Scheibe (1) nach einem der vorherigen Ansprüche, **dadurch gekennzeichnet, dass** die physikalische Schnittstelle (40) auf einem Rücksprung der Scheibe (1) angeordnet ist.

5. Fahrzeug-Scheibe (1) nach einem der vorherigen Ansprüche, **dadurch gekennzeichnet, dass** die zweite logische Schnittstelle (21) eine Eindraht- oder Zweidraht-Schnittstelle ist.

6. Fahrzeug-Scheibe (1) nach einem der vorherigen Ansprüche, **dadurch gekennzeichnet, dass** die zweite logische Schnittstelle (21) an ein Bus-System anbindbar ist.

7. Fahrzeug-Scheibe (1) nach Anspruch 6, **dadurch gekennzeichnet, dass** das Bus-System ein Fahrzeugbussystem ist.

8. Fahrzeug-Scheibe (1) nach Anspruch 6 oder 7, **dadurch gekennzeichnet, dass** das Bus-System ein CAN-Bus ist.

9. Fahrzeug-Scheibe (1) nach einem der vorherigen Ansprüche, **dadurch gekennzeichnet, dass** die zweite logische Schnittstelle (21) weiterhin Sensor- und/oder Anzeigeelemente in der Scheibe (1) elektrisch anbindet.

10. Fahrzeug-Scheibe (1) nach einem der vorherigen Ansprüche, **dadurch gekennzeichnet, dass** die physikalische Schnittstelle (40) an einem Rand der Scheibe (1) angeordnet ist.

11. Fahrzeug-Scheibe (1) nach einem der vorherigen Ansprüche, **dadurch gekennzeichnet, dass** die erste logische Schnittstelle (20) eine Wechselspannung bereitstellt.

12. Fahrzeug-Scheibe (1) nach einem der vorherigen Ansprüche 1 bis 10, **dadurch gekennzeichnet, dass** die erste logische Schnittstelle (20) eine Gleichspannung bereitstellt.

## Claims

1. Vehicle pane (1) having a plurality of integrated electro-optical elements (10₁,10₂,10_{3,}...10_{N}), wherein the electro-optical elements (10₁,10₂,10₃,...10_{N}) have a common supply voltage, wherein the integrated electro-optical elements (10₁,10₂,10₃,...10_{N}) can be controlled individually by logical control units (30;30₁,30₂,30₃...30_{N}), wherein each electro-optical element (10₁,10₂,10₃,...10_{N}) is addressed individually, such that the electro-optical elements (10₁,10₂,10₃,...10_{N}) can change the optical properties of the pane (1) at the respective location, wherein the control units (30;30₁,30₂,30₃...30_{N}) are arranged in an intermediate layer of the vehicle pane, wherein a first logical interface (20) for feeding in the common supply voltage and a second logical interface for feeding in a common control signal are provided for controlling the electro-optical elements (10₁,10₂,10₃,...10_{N}) and for providing the common supply voltage, wherein, downstream from the second logical interface (21), the common control signal is converted into control signals for the control of the integrated electro-optical elements (10₁,10₂,10₃,...10_{N}) individually, wherein a physical interface (40) configured as plug connector is arranged on one of the outer faces (100,400) of the pane (1), wherein the physical interface (40) for the first logical interface (20) and the second logical interface (21) has, together, 3 or 4 electrical connections.

2. Vehicle pane (1) according to claim 1, **characterized in that** the electro-optical elements (10₁,10₂,10₃,...10_{N}) are provided for controlling the optical transparency of the pane (1).

3. Vehicle pane (1) according to claim 1 or 2, **characterized in that** the electro-optical elements (10₁,10₂,10₃,...10_{N}) are selected from a group comprising: electrochromic coating, suspended particle device, liquid crystal, polymer dispersed liquid crystal device.

4. Vehicle pane (1) according to one of the preceding claims, **characterized in that** the physical interface (40) is arranged on a recess of the pane (1).

5. Vehicle pane (1) according to one of the preceding claims, **characterized in that** the second logical interface (21) is a single-wire or two-wire interface.

6. Vehicle pane (1) according to one of the preceding claims, **characterized in that** the second logical interface (21) can be connected to a bus system.

7. Vehicle pane (1) according to claim 6, **characterized in that** the bus system is a vehicle bus system.

8. Vehicle pane (1) according to claim 6 or 7, **characterized in that** the bus system is a CAN bus.

9. Vehicle pane (1) according to one of the preceding claims, **characterized in that** the second logical interface (21) further electrically connects sensor and/or display elements in the pane (1).

10. Vehicle pane (1) according to one of the preceding claims, **characterized in that** the physical interface (40) is arranged at an edge of the pane (1).

11. Vehicle pane (1) according to one of the preceding claims, **characterized in that** the first logical interface (20) provides an AC voltage.

12. Vehicle pane (1) according to one of the preceding claims 1 bis 10, **characterized in that** the first logical interface (20) provides a DC voltage.

## Revendications

1. Vitre de véhicule (1) ayant une pluralité d'éléments électro-optiques intégrés (10₁, 10₂, 10₃, ...10_{N}), dans laquelle les éléments électro-optiques (10₁, 10₂, 10₃, ...10_{N}) ont une tension d'alimentation commune, dans laquelle les éléments électro-optiques intégrés (10₁, 10₂, 10₃, ...10_{N}) peuvent être commandés individuellement par des unités de commande logiques (30;30₁,30₂,30₃...30_{N}), dans lesquelles chaque élément électro-optique (10₁, 10₂, 10₃, ...10_{N}) est adressé individuellement, de telle sorte que les éléments électro-optiques (10₁, 10₂, 10₃, ...10_{N}) peuvent modifier les propriétés optiques de la vitre (1) à l'emplacement respectif, dans lequel les unités de commande (30;30₁,30₂,30₃...30_{N}) sont disposées dans une couche intermédiaire de la vitre du véhicule, dans lequel une première interface logique (20) pour l'alimentation de la tension d'alimentation commune et une deuxième interface logique pour l'alimentation d'un signal de commande commun sont prévues pour commander les éléments électro-optiques (10₁, 10₂, 10₃, ...10_{N}) et pour la mise à disposition de la tension d'alimentation commune, le signal de commande commun étant converti, en aval de la deuxième interface logique (21), en signaux de commande pour la commande individuelle des éléments électro-optiques intégrés (10₁, 10₂, 10₃, ...10_{N}), une interface physique (40) conçue comme un connecteur étant disposée sur l'une des faces extérieures (100, 400) de la vitre (1), l'interface physique (40) pour la première interface logique (20) et la deuxième interface logique (21) présentant ensemble 3 ou 4 connexions électriques.

2. Vitre de véhicule (1) selon la revendication 1, **caractérisée en ce que** les éléments électro-optiques (10₁, 10₂, 10₃, ...10_{N}) sont prévus pour commander la transparence optique de la vitre (1).

3. Vitre de véhicule (1) selon la revendication 1 ou 2, **caractérisée en ce que** les éléments électro-optiques (10₁, 10₂, 10₃, ...10_{N}) sont choisis dans un groupe comprenant : un revêtement électrochrome, un dispositif à particules en suspension, un cristal liquide, un dispositif à cristal liquide dispersé dans un polymère.

4. Vitre de véhicule (1) selon l'une des revendications précédentes, **caractérisée en ce que** l'interface physique (40) est disposée sur un évidement de la vitre (1).

5. Vitre de véhicule (1) selon l'une des revendications précédentes, **caractérisé en ce que** la deuxième interface logique (21) est une interface monofilaire ou bifilaire.

6. Vitre de véhicule (1) selon l'une des revendications précédentes, **caractérisée en ce que** la deuxième interface logique (21) peut être connectée à un système de bus.

7. Vitre de véhicule (1) selon la revendication 6, **caractérisée en ce que** le système de bus est un système de bus de véhicule.

8. Vitre de véhicule (1) selon la revendication 6 ou 7, **caractérisée en ce que** le système de bus est un bus CAN.

9. Vitre de véhicule (1) selon l'une des revendications précédentes, **caractérisée en ce que** la deuxième interface logique (21) relie en outre électriquement des éléments de détection et/ou d'affichage dans la vitre (1).

10. Vitre de véhicule (1) selon l'une des revendications précédentes, **caractérisé en ce que** l'interface physique (40) est disposée sur un bord du vitrage (1).

11. Vitre de véhicule (1) selon l'une des revendications précédentes, **caractérisé en ce que** la première interface logique (20) fournit une tension alternative.

12. Vitre de véhicule (1) selon l'une des revendications précédentes 1 à 10, **caractérisée en ce que** la première interface logique (20) fournit une tension continue.
